# EUROPÄISCHE PATENTSCHRIFT

(11) **EP 0 889 269 B1**
(45) Veröffentlichungstag und Bekanntmachung des Hinweises auf die Patenterteilung: **09.10.2002**
(21) Anmeldenummer: 98111312.9
(22) Anmeldetag: 19.06.1998
(51) Int. Cl.: F16K 47/04

(54) **Regelbarer Kugelhahn**
Controllable ball valve
Robinet réglable à tournant sphérique

(30) Priorität: 04.07.1997 DE 19728562
(43) Veröffentlichungstag der Anmeldung: 07.01.1999
(73) Patentinhaber: Argus Gesellschaft mbH, 76275 Ettlingen (DE)
(72) Erfinder: Fechner, Bernd, 76275 Ettlingen (DE); Ecker, Winfried, 76275 Ettlingen (DE)
(74) Vertreter: Geitz, Heinrich, Dr.-Ing.

(56) Entgegenhaltungen:
- WO-A-94/07063
- DE-A- 2 654 769
- US-A- 5 680 889

## Beschreibung

Gegenstand der Erfindung ist ein regelbarer Kugelhahn mit einem Gehäuse, durch das sich ein Durchströmweg hindurcherstreckt, mit einem innerhalb des Gehäuses zwischen ringförmigen Dichtungen aufgenommenen kugelförmigen Absperrorgan, durch das sich ein Durchgangsweg hindurcherstreckt und das um eine quer zu diesem Durchgangsweg verlaufende Drehachse aus einer vollen Öffnungslage, in der der Durchströmweg des Gehäuses und der Durchgangsweg des Absperrorgans miteinander fluchten, in eine den Durchströmweg des Gehäuses sperrende Schließlage sowie in beliebige Drosselstellungen zwischen der vollen Öffnungs- und Schließlage betätigbar ist, und mit einem ersten und einem zweiten Drosselelement zur Druckabsenkung und Geräuschminderung bei in einer Drosselstellung stehendem Absperrorgan.

Aus der WO 94/07063 ist bereits ein regelbarer Kugelhahn dieser Art vorbekannt, bei dem das Absperrorgan zu- und abströmseitig mit je einem Drosselelement versehen ist und diese Drosselelemente in den Durchgangsweg des Absperrorgans vorstehende Zähne aufweisen. Ferner sind unmittelbar angrenzend an die Absperrkugel im Gehäuse auf der Zu- und Abströmseite weitere Drosselelemente mit ebenfalls in den jeweiligen Strömungsweg vorstehenden Zähnen angeordnet, die in der Drosselstellung mit den Drosselelementen des Absperrorgans zusammenwirken. Ferner erstrecken sich durch die eine Hälfte des Absperrorgans schräg zu dessen Strömungsdurchgang verlaufende Bohrungen fort, die in der Drosselstellung unter Umgehung der Drosselstelle ein Abströmen von Medium aus dem Durchgangsweg des Absperrorgans in den abströmseitigen Strömungsweg des Gehäuses ermöglichen.

Unbefriedigend bei dem vorbekannten Kugelhahn ist dessen komplizierter Aufbau insbesondere hinsichtlich des Absperrorgans, bei dem die zu- und abströmseitigen Drosselelemente einstückig mit dem Absperrorgan in Form von sägezahnartig in den Durchgangsweg des Absperrorgans hineinragenden Vorsprüngen ausgebildet sind. Darüber hinaus treten beim Zusammenwirken der Drosselelemente des Absperrorgans mit den gehäuseseitigen Drosselelementen geräuschbildende Turbulenzen auf, die durch das Abströmen von Medium aus dem Durchgangsweg des Absperrorgans in den abströmseitigen Strömungsweg des Gehäuses durch die zusätzlichen Querbohrungen im Absperrorgan verstärkt werden.

Durch die Erfindung soll daher ein regelbahrer Kugelhahn geschaffen werden, der im Vergleich zu dem vorbekannten Kugelhahn nach der WO 94/07063 sich durch einen einfachen Aufbau auszeichnet, bei dem in der Drosselstellung aber auch weitaus geringere Geräuschimmissionen auftreten als beim Stande der Technik.

Gelöst ist diese Aufgabe dadurch, daß bei dem regelbaren Kugelhahn nach dem Oberbegriff des Patentanspruchs 1 das Gehäuse aus wenigstens zwei jeweils einen Durchströmweg aufweisenden Gehäuseteilen besteht, daß die Drosselelemente als blendenartige Einsätze ausgebildet sind und daß das erste Drosselelement auf einer Seite des Absperrorgans im Mündungsbereich des sich durch dieses hindurcherstreckenden Durchgangsweges aufgenommen und das zweite Drosselelement auf der anderen Seite der Absperrkugel an diese angrenzend im Durchströmweg des einen Gehäuseteils angeordnet ist, und daß die Drosselelemente von einem peripheren Rand der blendenartigen Einsätze unter Ausbildung von Durchströmspalten parallel beabstandet voneinander in Drehrichtung des Absperrorgans in den jeweiligen Strömungsweg vorstehende und etwa über dessen halben Querschnitt reichende Zähne besitzen, die in einer Teilöffnungslage des Absperrorgans bis zu einer Drehöffnungsstellung von etwa 60° Strömungsteiler bilden.

Bei der Erfindung handelt es sich somit darum, daß im Mündungsbereich des sich durch das Absperrorgan hindurcherstreckenden Durchgangsweges ein ringförmiger Einsatz als erstes Drosselelement aufgenommen ist, was einen einfachen Aufbau des Absperrorgans gewährleistet. Bei dem zweiten Drosselelement handelt es sich ebenfalls um einen ringförmigen Einsatz, der auf der vom ersten Drosselelement abgewandten Seite des Absperrorgans unmittelbar angrenzend an dieses im Durchströmweg des Gehäuses aufgenommen ist.

Kennzeichnend für die Erfindung ist das Vorhandensein lediglich eines ersten und zweiten Drosselelements ohne jegliche weitere Einbauten oder zusätzliche das Absperrorgan durchbrechende Strömungswege, so daß nur im Zuund Abströmbereich des Absperrorgans in Abhängigkeit von dessen Einstellung Druckabsenkungen des strömenden Mediums bei weitgehend geringer Störung der Strömung und demgemäß geringer Geräuschentfaltung eintreten.

Insbesondere in der Offenstellung des Absperrorgans findet in demjenigen Bereich der blendenartigen Einsätze, in die dessen Zähne nicht hineinreichen, eine weithin unbehinderte Strömung statt, so daß trotz der Drosselelemente ein hoher Strömungsdurchsatz gewährleistet ist. In der Drosselstellung hingegen wirken die vorstehenden Zähne der blendenartigen Einsätze als Strömungsteiler, die parallel voneinander beabstandete Durchströmspalte ausbilden.

Gemäß einer sinnvollen Weiterbildung der Erfindung ist das im Durchgangsweg durch das Absperrorgan aufgenommene erste Drosselelement zuströmseitig angeordnet und das zweite, im Durchströmweg des einen Gehäuseteils aufgenommene Drosselelement befindet sich dann auf der Abströmseite des Absperrorgans.

Gemäß einer anderen Weiterbildung der Erfindung ist die Anordnung dabei so getroffen, daß die in den Durchgangsweg des Absperrorgans hineinragenden Zähne des ersten Drosselelements von dessen peripheren Rand in Schließrichtung des Absperrorgans und die in den Durchströmweg des einen Gehäuseteils hineinragenden Zähne des zweiten Drosselelements entgegen der Schließrichtung des Absperrorgans vorstehen. Die Zähne der beiden Drosselelemente stehen somit jeweils von einem sich etwa über den halben Umfang der blendenartigen Einsätze erstreckenden Bereich nach gleichen Richtungen in den Durchgangsweg des Absperrorgans einerseits und in den Durchströmweg des einen Gehäuseteils andererseits vor.

Gemäß einer abermaligen Weiterbildung enden die in den jeweiligen Strömungsweg als Strömungsteiler vorstehenden Zähne der Drosselelemente jeweils auf einer Kreislinie, deren Mittelpunkt auf der von den Zähnen abgewandten Seite liegen. Dabei sind die Radien dieser Kreislinien höchstens gleich dem Durchmesser des jeweiligen Strömungsweges.

Angesichts dieser Ausbildung der vorstehenden Zähne der Drosselelemente ist der eine ungehinderte Strömung zulassende, von vorstehenden Zähnen freie Bereich etwa linsenförmig ausgebildet und beim Betätigen des Absperrorgans in eine Drosselstellung verringert sich nach und nach dieser von Zähnen freie Durchströmbereich, bis hin zum vollständigen Verschwinden, wenn die freien Enden der mittleren Zähne des im Durchgangsweg des Absperrorgans aufgenommenen Drosselelements die angrenzende Dichtung überfahren bzw. der den Durchgangsweg begrenzende Rand des Absperrorgans die freien Enden der Zähne des zweiten Drosselelements überfährt. Auch in dieser Betriebsstellung ist eine weitgehend turbulenzfreie und geräuscharme Strömung durch die parallel zueinander verlaufende Durchströmspalte gewährleistet.

Gemäß einer nochmals anderen Weiterbildung der Erfindung weisen die von den als Strömungsteiler in den jeweiligen Strömungsweg vorstehenden Zähnen gebildeten Durchströmspalte untereinander gleiche Breiten auf. Es können aber auch die Durchströmspalte zwischen den vorstehenden Zähnen des ersten Drosselelements eine von den Durchströmspalten des zweiten Drosselelements abweichende, insbesondere kleinere Breite haben.

Eine abermals wichtige Weiterbildung sieht vor, daß das im Durchströmweg eines Gehäuseteils angeordnete zweite Drosselelement einstückig mit einer axialbeweglich geführten und mittels Federkraft mit Dichtflächen an das Absperrorgan angepreßten Dichtung ausgebildet ist. Bei dieser Weiterbildung bedarf es somit auf der einen Seite des Absperrorgans keiner zusätzlichen Dichtung, sondern das als ringförmige Blende ausgebildete zweite Drosselelement erfüllt gleichzeitig die Funktion als Dichtung.

Anhand der beigefügten Zeichnung soll nachstehend eine Ausführungsform der Erfindung erläutert werden. In schematischen Ansichten zeigen:
- Fig. 1: einen der Schnittlinie I-I in Fig. 2 entsprechenden Längsschnitt durch einen erfindungsgemäßen Regelkugelhahn mit zu- und abströmseitigen Drosselelementen in Form von blendenartigen Einsätzen bei in Offenstellung stehender Absperrkugel,
- Fig. 2: einen der Schnittlinie II-II in Fig. 1 entsprechenden Längsschnitt durch den Regelkugelhahn,
- Fig. 3: eine stirnseitige Ansicht des Regelkugelhahns gemäß Pfeil III in Fig. 1,

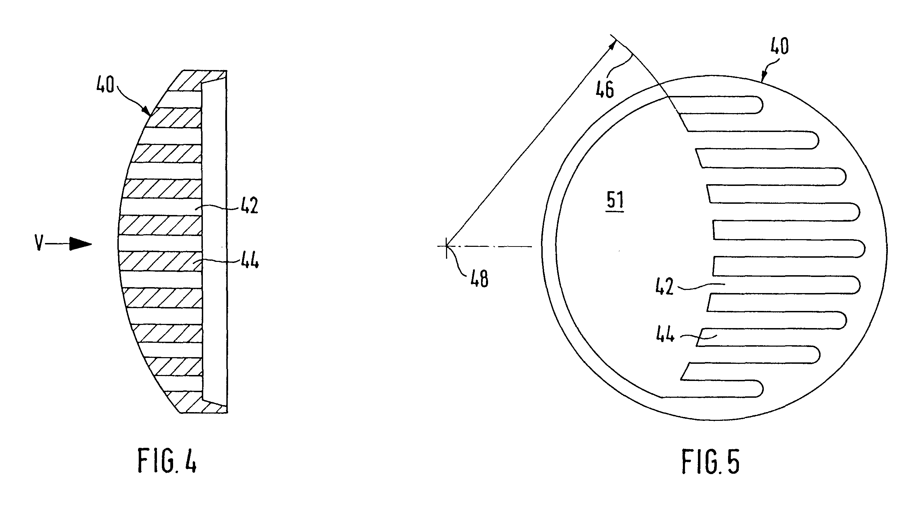

- Fig. 4: den das zuströmseitige Drosselelement bildenden Einsatz für sich allein in einer Ansicht wie in Fig. 1,
- Fig. 5: den zuströmeitigen Einsatz für sich allein in einer Ansicht gemäß Pfeil V in Fig. 4,
- Fig. 6: den das abströmseitige Drosselelement bildenden Einsatz für sich allein in einer Ansicht wie in Fig. 1,
- Fig. 7: den zuströmseitigen Einsatz für sich allein in einer Ansicht gemäß Pfeil VII in Fig. 6,
- Fig. 8: den Regelkugelhahn in einer Längsschnittansicht wie in Fig. 2 mit dem Absperrorgan in einer gegenüber der Offenstellung etwa um 45° um seine Drehachse verschwenkten Drosselstellung und
- Fig. 9: den Regelkugelhahn in einer stirnseitigen Ansicht wie in Fig. 3, jedoch mit der Absperrkugel in einer gegenüber der Offenstellung um etwa 30° um seine Drehachse verschwenkten Drosselstellung.

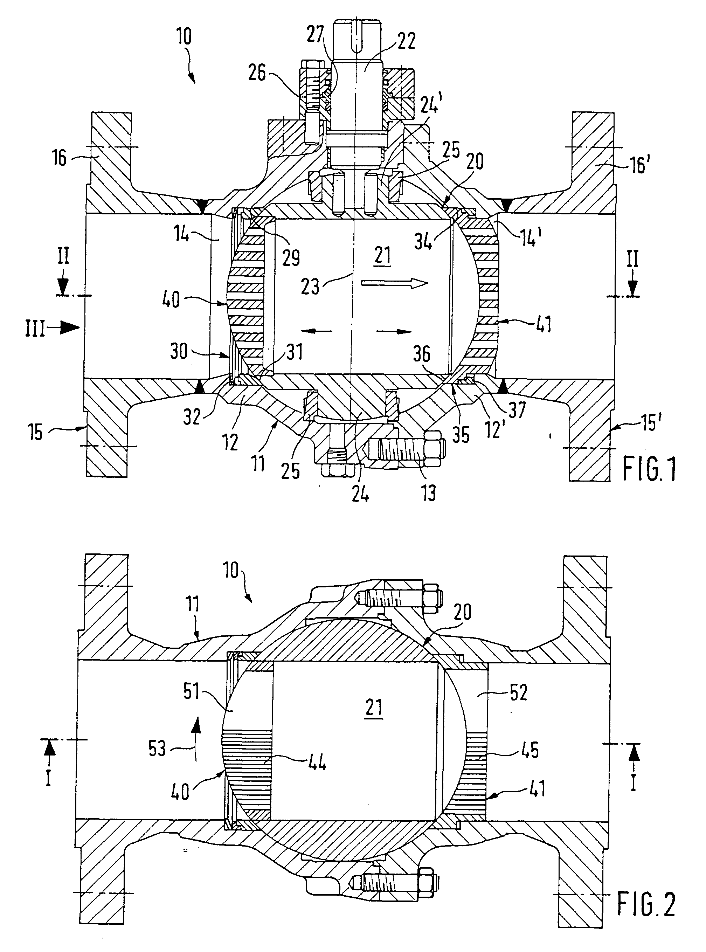

Der in Fig. 1 in einer Längsschnittansicht dargestellte Kugelhahn 10 besitzt ein Gehäuse 11, das aus zwei einander zu einer angenäherten Kugelform ergänzenden Gehäuseteilen 12, 12' besteht. Die beiden Gehäuseteile 12, 12' sind mittels Schrauben 13 in hier im einzelnen nicht interessierender Weise miteinander verbunden. Die Gehäuseteile 12, 12' haben miteinander fluchtende Durchströmwege 14, 14'. An den voneinander abgewandten Seiten des Gehäuses 11 sind an die Gehäuseteile 12, 12' Rohrabschnitte 15, 15' mit Anschlußflanschen 16, 16' angeschweißt, die den Einbau des Kugelhahns in eine nicht dargestellte Rohrleitung vermitteln.

Innerhalb des Gehäuses ist als Absperrorgan eine Absperrkugel 20 mit einer Durchgangsbohrung 21 zwischen in den Gehäuseteilen 12, 12' aufgenommenen Dichtungen angeordnet. Mittels einer Schaltwelle 22 ist die Absperrkugel 20 um eine Drehachse 23 zwischen der in den Fig. 1 und 2 gezeigten Öffnungslage, in der die Durchgangsbohrung 21 mit den Durchströmwegen 14, 14' der Gehäuseteile 12, 12' fluchtet, und einer gegenüber der Öffnungslage um 90° verschwenkten Schließlage, in der die Durchströmwege 14, 14' voneinander getrennt sind, schaltbar und in jeder Zwischenstellung einstellbar. Die Drehachse 23 verläuft rechtwinklig zur Durchgangsbohrung 21 der Absperrkugel 20.

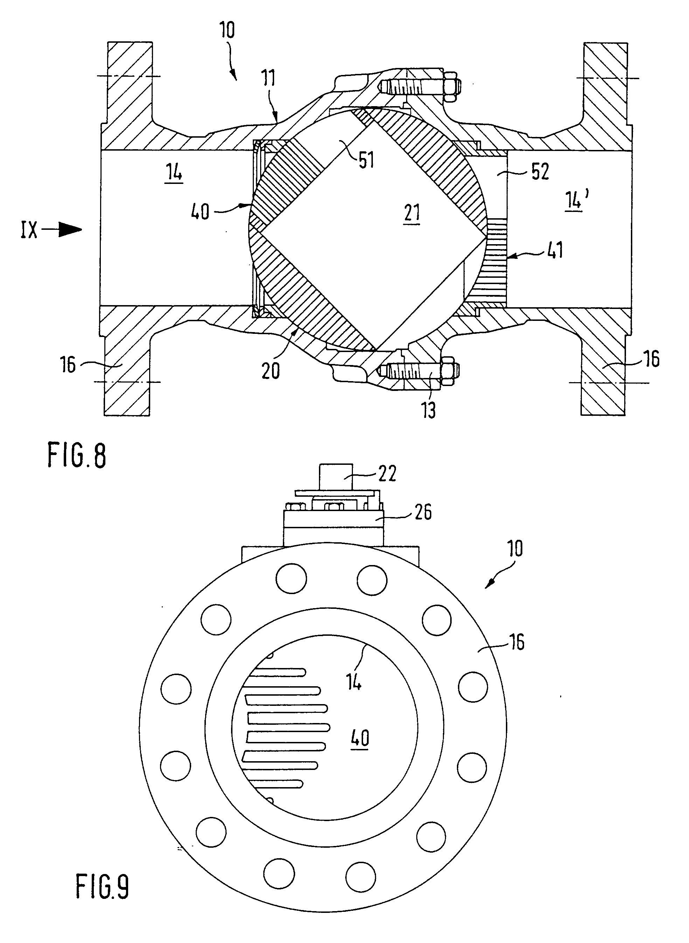

Die Figuren 8 und 9 zeigen in schematischer Darstellung Zwischenpositionen der Absperrkugel 20 beim Schalten eines derartigen Kugelhahns 10 von der Offenstellung in die Schließlage bzw. umgekehrt, in der die Längsachse der Durchgangsbohrung 21 in einem Winkel von etwa 45° bzw. 30° gegenüber den Durchströmwegen 14, 14' der Gehäuseteile 12, 12' steht.

Die Absperrkugel 20 ist mittels auf einander gegenüberliegenden Seiten angedrehter Lagerzapfen 24, 24' in im Gehäuse 11 aufgenommenen Lagerbuchsen 25, 25' drehbar gelagert. Die Schaltwelle 22 erstreckt sich durch einen Gehäuseaufsatz 26 fort und ist in diesen in bekannter Weise drehbar gelagert sowie mittels einer Stoffbuchsenanordnung 27 gegenüber dem die Absperrkugel 20 aufnehmenden Gehäuseinnenraum abgedichtet sowie in hier nicht weiter interessierender Weise drehfest mit der Absperrkugel 20 verbunden. Die Schaltbetätigung des Kugelhahns 10 zwischen der Offenstellung und Schließlage der Absperrkugel 20 bzw. umgekehrt erfolgt mittels eines nicht dargestellten Stellmotors, der mit der Schaltwelle 22 drehfest gekuppelt ist, oder mittels eines ebenfalls nicht dargestellten Handrades, das an dem von der Absperrkugel 20 entfernten Ende auf der Schaltwelle 22 aufgenommen und mit dieser drehfest verbunden ist.

In dem zuströmseitigen Gehäuseteil 12 ist in einer gegenüber dem sich durch diesen Gehäuseteil hindurcherstreckenden Durchströmweg 14 radial erweiterten Ringkammer 29 eine Dichtung 30 aufgenommen. Bei dieser Dichtung handelt es sich um eine bekannte metallische Dichtung mit einer an der Absperrkugel 20 anliegenden Dichtfläche 31, die der sphärischen Kugelform angepaßt ist. Auf der von der Absperrkugel 20 abgewandten Seite stützt sich die Dichtung an einer deren Anpressung an die Absperrkugel 20 vermittelnden Tellerfeder 32 ab.

Auch in dem abströmseitigen Gehäuseteil 12' ist in einer gegenüber dem Durchströmweg 14' radial erweiterten Ringkammer 34 eine einstückig mit einem unten noch zu beschreibenden Drosselelement ausgebildete Dichtung 35 aufgenommen. Diese Dichtung liegt mit einer der Kugelform angepaßten Dichtfläche 36 an der Absperrkugel 20 an und wird ebenfalls mittels einer Tellerfeder 37, die sich ihrerseits an einer die Ringkammer axial begrenzenden Schulter abstützt, an die Absperrkugel 20 angepreßt.

Der Regelkugelhahn 10 ist zu- und abströmseitig mit je einem Drosselelement 40, 41 ausgerüstet. Diese Drosselelemente sind als blendenartige Einsätze ausgebildet und haben von einem peripheren Rand eines Ringkörpers unter Ausbildung von Durchströmspalten 42, 43 parallel zueinander vorstehende Zähne 44, 45. Diese Zähne stehen etwa über den halben Strömungsquerschnitt vor und enden auf einer gedachten Kreislinie 46, 47, deren Mittelpunkt 48, 49 jenseits des von Zähnen freien Blendenbereichs 50, 51 liegt.

Das zuströmseitige Drosselelement ist in einer radialen Erweiterung 52 im zuströmseitigen Mündungsbereich der Durchgangsbohrung 21 der Absperrkugel 20 aufgenommen und weist eine der Kugelform angepaßte Außenkontur 53 auf. Die Zähne 44 stehen senkrecht zur Drehachse der Absperrkugel 20 in deren Durchgangsbohrung 21 vor, und zwar in Drehrichtung der Absperrkugel 20 bei deren Verschwenken in Richtung Schließlage.

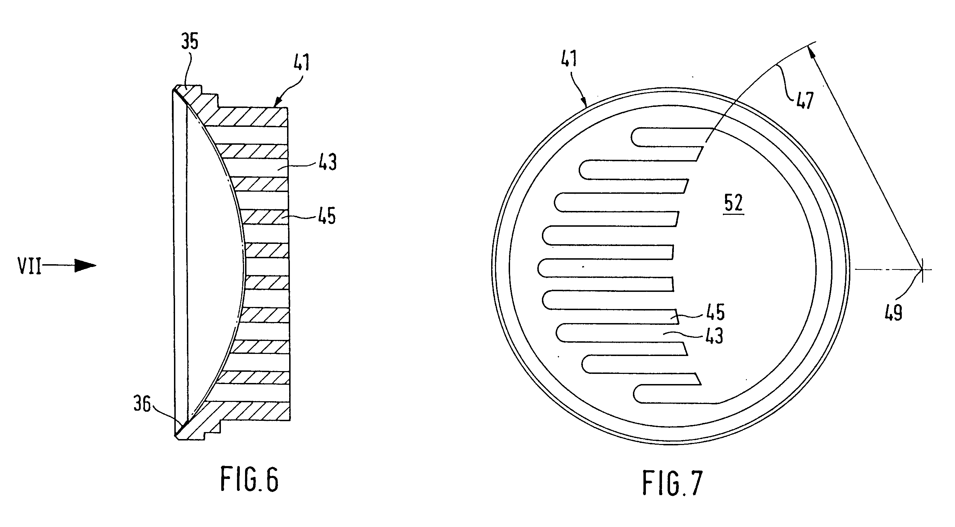

Das abströmseitige Drosselelement 41, das einstückig mit der abströmseitigen Dichtung 35 ausgebildet ist, ist unmittelbar an die Absperrkugel 20 anschließend im Durchströmweg 14' des abströmseitigen Gehäuseteils 12' aufgenommen. Von einem umlaufenden Ringkörper stehen, wie insbesondere Fig. 7 zeigt, ebenfalls unter Ausbildung von Durchströmspalten 43 parallel zueinander verlaufende Zähne 45 in den Durchströmweg vor, und zwar der Drehrichtung der Absperrkugel 20 bei deren Betätigung in die Schließlage entgegengerichtet. Die Zähne 45 enden ebenfalls auf einer Kreislinie 47, deren Krümmungsmittelpunkt 49 jenseits des von Zähnen 45 freien Blendenbereichs 52 liegt. Auf der zur Absperrkugel 20 hinweisenden Seite besitzt das Drosselelement 41 eine der Kugelform angepaßte Kontur.

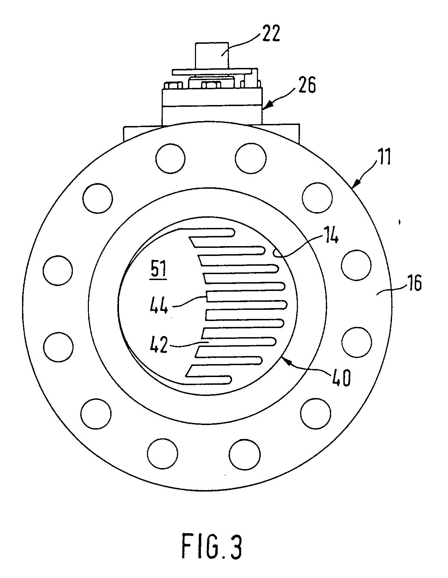

Die Fig. 1 bis 3 zeigen den Regelkugelhahn 10 mit der Absperrkugel 20 in voller Öffnungsstellung. In dieser Betriebsstellung besteht nur eine unwesentliche Beeinträchtigung des freien Strömungsquerschnittes. Dies zeigt insbesondere Fig. 3. Wenn nun die Absperrkugel 20 in Richtung Schließlage gemäß Pfeil 53 in Fig. 3 um ihre Drehachse 23 verschwenkt wird, vermindert sich mit fortschreitendem Schließvorgang der Durchströmbereich zwischen den vorstehenden Zähnen 44 des zuströmseitigen Drosselelements 40 und der zuströmseitigen Dichtung 30 einerseits sowie zwischen den in den Strömungsweg 14' des abströmseitigen Gehäuseteils 12' vorstehenden Zähnen 45 und der Begrenzung der sich durch die Absperrkugel hindurcherstreckenden Durchgangsbohrung 21.

In Fig. 8 ist eine Betriebsstellung der Absperrkugel 20 dargestellt, in der sich der von Zähnen 44 freie Bereich 51 des zuströmseitigen Drosselelements 40 in einer aus dem Durchströmweg 14 des zuströmseitigen Gehäuseteils 12 verschwenkten Lage befindet und der von vorstehenden Zähnen 45 freie Bereich 52 des abströmseitigen Drosselelements 41 außerhalb der Durchgangsbohrung 21 der Absperrkugel 20 steht.

Fig. 9 veranschaulicht mit Blick auf die Zuströmseite des Regelkugelhahns 10 eine Zwischenstellung der Absperrkugel 20, bei der die mittleren Zähne 44 des zuströmseitigen Drosselelements 40 gerade noch einen linsenförmigen Bereich des Durchgangsquerschnittes freigeben.

Naturgemäß durchströmt bei einer derartigen Betriebsstellung der Absperrkugel 20 das zu schleusende Medium unter beträchtlicher Drosselung die zwischen den vorstehenden Zähnen 44, 45 gebildeten Durchströmspalte 42, 43 und erfährt dabei je nach Einstellung der Absperrkugel 20 eine mehr oder weniger große Drosselung ohne nennenswerte Geräuschentfaltung. Die in die Durchgangsbohrung 21 der Absperrkugel 20 vorstehenden Zähne 44 des zuströmseitigen Drosselelements 40 und die in den Durchströmweg 14' des abströmseitigen Gehäuseteils 12 vorstehenden Zähne 45 des abströmseitigen Drosselelements 41 bilden Strömungsteiler von in Strömungsrichtung jeweils nur kurzer Erstreckung, die nur im unmittelbaren Drosselbereich jeweils zu einer Absenkung des statischen Drucks führen, im übrigen jedoch die Strömung im Kugelhahn 10 nicht nennenswert beeinträchtigen.

## Patentansprüche

1. Regelbarer Kugelhahn mit einem Gehäuse (11), durch das sich ein Durchströmweg hindurcherstreckt, mit einem innerhalb des Gehäuses (11) zwischen ringförmigen Dichtungen aufgenommenen kugelförmigen Abperrorgan (20), durch das sich ein Durchgangsweg hindurcherstreckt und das um eine quer zu diesem Durchgangsweg verlaufende Achse (23) aus einer vollen Öffnungslage, in der der Durchströmweg des Gehäuses (11) und der Durchgangsweg des Absperrorgans (20) miteinander fluchten, in eine den Durchströmweg sperrende Schließlage sowie in beliebige Drosselstellungen zwischen der vollen Öffnungslage und der vollen Schließlage betätigbar ist, und mit einem ersten und einem zweiten Drosselelement (40, 41) zur Druck- und Geräuschminderung bei in einer Drosselstellung stehendem Absperrorgan (20),
**dadurch gekennzeichnet,**
**daß** das Gehäuse (11) aus wenigstens zwei jeweils einen Durchströmweg aufweisenden Gehäuseteilen (12, 12') besteht, **daß** die Drosselelemente (40, 41) als blendenartige Einsätze ausgebildet sind und **daß** das erste Drosselelement (40) auf einer Seite des Absperrorgans (20) im Mündungsbereich des sich durch dieses hindurcherstreckenden Durchgangsweges (21) aufgenommen und das zweite Drosselelement (41) auf der anderen Seite des Absperrorgans (20) an dieses angrenzend im Durchströmweg (14') de einen Gehäuseteils (12') angeordnet ist, und **daß** die Drosselelemente (40, 41) von einem peripheren Rand der Einsätze unter Ausbildung von Durchströmspalten (42, 43) parallel beabstandet voneinander in Drehrichtung des Absperrorgans (20) in den jeweiligen Strömungsweg vorstehende und etwa über dessen halben Querschnitt reichende Zähne (44, 45) besitzen, die in einer Teilöffnungslage des Absperrorgans (20) bis zu einer Drehöffnungsstellung von etwa 60° Strömungsteiler bilden.

2. Kugelhahn nach Anspruch 1, **dadurch gekennzeichnet, daß** das im Durchgangsweg (21) durch das Absperrorgan (20) aufgenommene erste Drosselelement (40) zuströmseitig angeordnet ist und **daß** sich das zweite, im Durchströmweg (14') des einen Gehäuseteils (12') aufgenommene Drosselelement (41) auf der Abströmseite des Absperrorgans (20) befindet.

3. Kugelhahn nach Anspruch 1 oder 2, **dadurch gekennzeichnet, daß** die in den Durchgangsweg (21) des Absperrorgans (20) hineinragenden Zähne (44) des ersten Drosselelements (40) von dessen peripheren Rand in Schließrichtung des Absperrorgans (20) und die in den Durchströmweg (14') des einen Gehäuseteils (12') hineinragenden Zähne (45) des zweiten Drosselelements (41) entgegen der Schließrichtung des Absperrorgans (20) vorstehen.

4. Kugelhahn nach einem der Ansprüche 1 bis 3, **dadurch gekennzeichnet, daß** die in den jeweiligen Strömungsweg als Strömungsteiler vorstehenden Zähne (44,45) der Drosselelemente (40,41) auf einer Kreislinie (46,47) enden, deren Mittelpunkte (48,49) auf der von den Zähnen (44,45) abgewandten Seite liegen.

5. Kugelhahn nach Anspruch 4, **dadurch gekennzeichnet, daß** die Radien der Kreislinien (46,47), auf denen die Zähne (44,45) der Drosselelemente (40,41) enden, höchstens gleich dem Durchmesser des jeweiligen Strömungsweges sind.

6. Kugelhahn nach einem der Ansprüche 1 bis 5, **dadurch gekennzeichnet, daß** die als Strömungsteiler von den Drosselelementen (40,41) in den jeweiligen Strömungsweg vorstehenden Zähnen (44,45) gebildeten Durchströmspalte (42,43) vorzugsweise gleiche Breite aufweisen.

7. Kugelhahn nach einem der Ansprüche 1 bis 5, **dadurchgekennzeichnet, daß** die Durchströmspalte (42) zwischen den vorstehenden Zähnen (44) des ersten Drosselelements (40) eine kleinere Breite als die entsprechende Durchströmspalte (43) des zweiten Drosselelements (41) aufweisen.

8. Kugelhahn nach einem der vorhergehenden Ansprüche, **dadurch gekennzeichnet, daß** das im Durchströmweg (14') eines Gehäuseteils (12') angeordnete zweite Drosselelement (41) einstückig mit einer axialbeweglich geführten und mittels Federkraft mit Dichtflächen (36) an das Absperrorgan (20) angepreßten Dichtung (35) ausgebildet ist.

## Claims

1. Regulable ball valve with a housing (11), through which a throughflow path extends, with a spherical blocking element (20), which is received within the housing (11) between annular seals and through which a passage extends, the blocking element being actuable about an axis (23), which extends transversely to this passage, from a fully open position, in which the throughflow path of the housing (11) and the passage of the blocking element (20) are in mutual alignment, into a closed position blocking the throughflow path as well as into any throttle settings between the fully open position and the fully closed position, and with a first and a second throttle element (40, 41) for pressure and noise reduction when the blocking element (20) is disposed in a throttle setting, **characterised in that** the housing (11) consists of at least two housing parts (12, 12') each having a respective throughflow path, that the throttle elements (40, 41) are constructed as screen-like inserts and **that** the first throttle element (40) is received on one side of the blocking element (20) in the mouth region of the passage extending therethrough and the second throttle element (41) is arranged on the other side of the blocking element (20) adjacent thereto in the throughflow path (14') of the one housing part (12') and that the throttle element (40, 41) have teeth (44, 45) which project from a peripheral edge of the inserts under formation of throughflow gaps (42, 43) parallelly at a mutual spacing in rotational direction of the blocking element (20) into the respective flow path, extend over approximately half the cross-section thereof and form flow dividers in a partially open position of the blocking element (20) up to a rotationally open setting of about 60°.

2. Ball valve according to claim 1, **characterised in that** the first throttle element (40) received in the passage (21) through the blocking element (20) is arranged at the inflow side and **that** the second throttle element (41) received in the throughflow path (14') of the one housing part (12') is disposed on the outflow side of the blocking element (20).

3. Ball valve according to claim 1 or 2, **characterised in that** the teeth (44), which protrude into the passage (21) of the blocking element (20), of the first throttle element (40) project from the peripheral edge thereof in closing direction of the blocking element (20) and the teeth (45), which protrude into the throughflow path (14') of the one housing part (12'), of the second throttle element (41) project counter to the closing direction of the blocking element (20).

4. Ball valve according to one of claims 1 to 3, **characterised in that** the teeth (44, 45), which protrude into the respective flow path as flow dividers, of the throttle elements (40, 41) end on a circular line (46, 47), the centre point (48, 49) of which is disposed on the side remote from the teeth (44, 45).

5. Ball valve according to claim 4, **characterised in that** the radii of the circular lines (46, 47) on which the teeth (44, 45) of the throttle elements (40, 41) end are at most equal to the diameter of the respective flow path.

6. Ball valve according to one of claims 1 to 5, **characterised in that** the throughflow gaps (42, 43) formed as flow dividers by the teeth (44, 45) protruding from the throttle elements (40, 41) into the respective flow path preferably have the same width.

7. Ball valve according to one of claims 1 to 5, **characterised in that** the throughflow gaps (42) between the protruding teeth (44) of the first throttle element (40) have a smaller width than the corresponding throughflow gaps (43) of the second throttle element (41).

8. Ball valve according to one of the preceding claims, **characterised in that** the second throttle element (41) arranged in the throughflow path (14') of one housing part (12') is constructed integrally with a seal (35) which is guided to be axially movable and which is pressed by sealing surfaces (36), by means of spring force, against the blocking element (20).

## Revendications

1. Robinet réglable à tournant sphérique avec un boîtier (11) à travers lequel s'étend un chemin d'écoulement, avec un organe d'arrêt sphérique (20) logé à l'intérieur du boîtier (11) entre des joints d'étanchéité annulaires à travers lequel s'étend un chemin de passage et qui est actionnable autour d'un axe (23) s'étendant transversalement à ce chemin de passage, d'une position d'ouverture entière, dans laquelle le chemin d'écoulement du boîtier (11) et le chemin de passage de l'organe d'arrêt (20) sont alignés, en une position de fermeture fermant le chemin d'écoulement ainsi que dans des positions d'étranglement sélectives entre la position d'ouverture entière et la position de fermeture entière, et avec un premier et un deuxième élément d'étranglement (40, 41) pour la réduction de la pression et du bruit dans le cas d'un organe d'arrêt (20) se trouvant en position d'étranglement,
**caractérisé en ce que** le boîtier (11) est constitué d'au moins deux parties de boîtier (12, 12') présentant respectivement un chemin d'écoulement, **en ce que** les éléments d'étranglement (40, 41) sont réalisés comme inserts semblables à des obturateurs et **en ce que** le premier élément d'étranglement (40) est reçu sur un côté de l'organe d'arrêt (20) dans la zone d'embouchure du chemin de passage (21) s'étendant à travers celui-ci et que le deuxième élément d'étranglement (41) est disposé de l'autre côté de l'organe d'arrêt (20), en avoisinant celui-ci, dans le chemin d'écoulement (14') d'une partie de boîtier (12'), et **en ce que** les éléments d'étranglement (40, 41) possèdent des dents (44, 45), faisant saillie à partir d'un bord périphérique des inserts, en réalisant des fentes d'écoulement (42, 43) espacées parallèlement les unes des autres, dans la direction de rotation de l'organe d'arrêt (20) dans le chemin d'écoulement respectif et s'étendant à peu près sur la demi-section transversale de celui-ci, qui forment des diviseurs d'écoulement dans une position d'ouverture partielle de l'organe d'arrêt (20) jusqu'à une position d'ouverture de rotation d'environ 60°.

2. Robinet à tournant sphérique selon la revendication 1, **caractérisé en ce que** le premier élément d'étranglement (40) reçu dans le chemin de passage (21) par l'organe d'arrêt (20) est disposé côté afflux et **en ce que** le deuxième élément d'étranglement (41) logé dans le chemin de passage (14') d'une partie de boîtier (12') se trouve au côté d'écoulement de l'organe d'arrêt (20).

3. Robinet à tournant sphérique selon la revendication 1 ou 2, **caractérisé en ce que** les dents (44) du premier élément d'étranglement (40) faisant saillie dans le chemin de passage (21) de l'organe d'arrêt (20) font saillie à partir du bord périphérique de celui-ci dans la direction de fermeture de l'organe d'arrêt (20) et les dents (45) du deuxième élément d'étranglement (41) faisant saillie dans le chemin d'écoulement (14') d'une partie de boîtier (12) font saillie contre la direction de fermeture de l'organe d'arrêt (20).

4. Robinet à tournant sphérique selon l'une des revendications 1 à 3, **caractérisé en ce que** les dents (44, 45) des éléments d'étranglement (40, 41) faisant saillie dans le chemin d'écoulement respectif comme diviseurs d'écoulement se terminent sur une ligne circulaire (46, 47) dont les centres (48, 49) se situent sur le côté éloigné des dents (44, 45).

5. Robinet à tournant sphérique selon la revendication 4, **caractérisé en ce que** les rayons des lignes circulaires (46, 47) sur lesquels se terminent les dents (44, 45) des éléments d'étranglement (40, 41) sont tout au plus égaux au diamètre du chemin d'écoulement respectif.

6. Robinet à tournant sphérique selon l'une des revendications 1 à 5, **caractérisé en ce que** les fentes d'écoulement (42, 43) formées par les dents (44, 45) faisant saillie, en tant que diviseurs d'écoulement, à partir des éléments d'étranglement (40, 41) dans le chemin d'écoulement respectif, ont de préférence une même largeur.

7. Robinet à tournant sphérique selon l'une des revendications 1 à 5, **caractérisé en ce que** les fentes d'écoulement (42) entre les dents saillantes (44) du premier élément d'étranglement (40) présentent une plus petite largeur que les fentes d'écoulement correspondantes (43) du second élément d'étranglement (41).

8. Robinet sphérique selon l'une des revendications précédentes, **caractérisé en ce que** le deuxième élément d'étranglement (41) disposé dans le chemin d'écoulement (14') d'une partie de boîtier (12') est réalisé en une pièce avec un joint d'étanchéité (35) guidé d'une manière déplaçable axialement et appliqué au moyen d'une force de ressort avec des faces d'étanchéité (36) à l'organe d'arrêt (20).
